# EUROPEAN PATENT SPECIFICATION

(11) **EP 0 838 044 B1**
(45) Date of publication and mention of the grant of the patent: **10.10.2001**
(21) Application number: 96925695.7
(22) Date of filing: 10.07.1996
(51) Int. Cl.: G02C 5/22

(54) **HINGE FOR AUTOMATIC CLOSURE OF SPECTACLE ARMS**
SCHARNIER FÜR DAS AUTOMATISCHE SCHLIESSEN VON BRILLENBÜGELN
CHARNIERE POUR FERMETURE AUTOMATIQUE DE BRANCHES DE LUNETTES

(30) Priority: 11.07.1995 IT BL950011
(43) Date of publication of application: 29.04.1998
(73) Proprietor: Dioguardi, Franco, Ponte Nelle Alpi (IT); Todeschini, Mario Giuseppe, Nebbiu di Pieve di Cadore (IT)
(72) Inventor: Dioguardi, Franco, Ponte Nelle Alpi (IT); Todeschini, Mario Giuseppe, Nebbiu di Pieve di Cadore (IT)
(74) Representative: Beszédes, Stephan G., Dr.
(86) International application number: EP9603006
(87) International publication number: WO9703379

(56) References cited:
- FR-A- 413 556
- FR-A- 988 362
- FR-A- 2 700 397
- US-A- 3 762 805
- US-A- 3 923 384

## Description

This invention is a new type of articulated joint that is fitted between the arms and the front tip of the spectacles, by means of which hinge the arm closes automatically when it has been removed from the head or from any other agent that causes the arms to stay open in relation to the front of the spectacles.

The original feature of this invention is the fact that it consists of a reel or drum onto which an elastic device is wound that is attached to one end of the hinge and adapted to house and hold in position the end of a spring. The other end of the spring is held in position in a box that contains it and centres it. This box is fitted to the other end of the hinge that is to be assembled and is internally provided with viscous antifriction material that gradually makes the elastic device expand as a reaction to closure.

Many different hinge systems are known, particularly those between the arms and the edges of the frames of spectacles. These usually use a closure screw between a flat revolving part that is housed and immobilised between two fixed parts of which one is usually threaded in order to ensure that the centring screw is held firmly in position.

All these hinge systems are fitted to items of very small dimensions and this is a first disadvantage because of the difficulty of axially aligning the parts that need to be joined.

Attempts have been made to overcome this disadvantage through alternative solutions that eliminated the use of centring screws. But these solutions were too complicated and were often not reliable and for this reason the established technique remains that of fitting a closure and centring screw, despite the aforementioned disadvantages that this brings.

Moreover, normal hinges for spectacles need to accompany the arms for the whole of the closure stroke.

To overcome this last disadvantage, a very large number of systems have been devised to make the hinge connecting the arms to the front of the spectacles elastic.
All these systems are designed to ensure that the arms open sufficiently, especially when the wearer puts on the spectacles, and are also designed to make the arms snap into the closed position when they are not in use.

All the known systems of elastic opening are not only complicated and therefore costly but they also enable only a limited opening of the arms in relation to the frame to which they are hinged. During the closure phase, these systems of elastic opening also require the arms to be given an initial push in order to enable the arms to overcome an initial point of inertia.

In all present spectacle frames, both of the normal and elastic type, a stop prevents the arms from opening beyond a certain point; the repeated knocking against these stops damages the frame and alters the position of the lenses in relation to the bridge and the nose rest that link them.

The aim of this invention is to enable spectacles to be produced that are able to gradually come to lie completely flat on the frame by themselves without being pushed, as soon as there is nothing keeping them open.

Another aim of the invention is to produce glasses that are fitted with arms to the opening of which virtually no limit is set. This will eliminate all risks of deformation of the frame whilst it will guarantee adequate pressure of the arms on the temples.

A further aim of the invention was to devise a spectacle frame that was free of the traditional and inconvenient system of a centring screw or pivot.

Yet another aim of the invention was to devise a hinge enabling elastic opening that would be both extremely simple and therefore also sufficiently hardwearing and long lasting.

These and other aims have been completely achieved by this invention, as can be seen from the following description of one of the forms that it might take. This description is purely illustrative and not restrictive and also uses the 5 schematic figures shown in the attached plates:

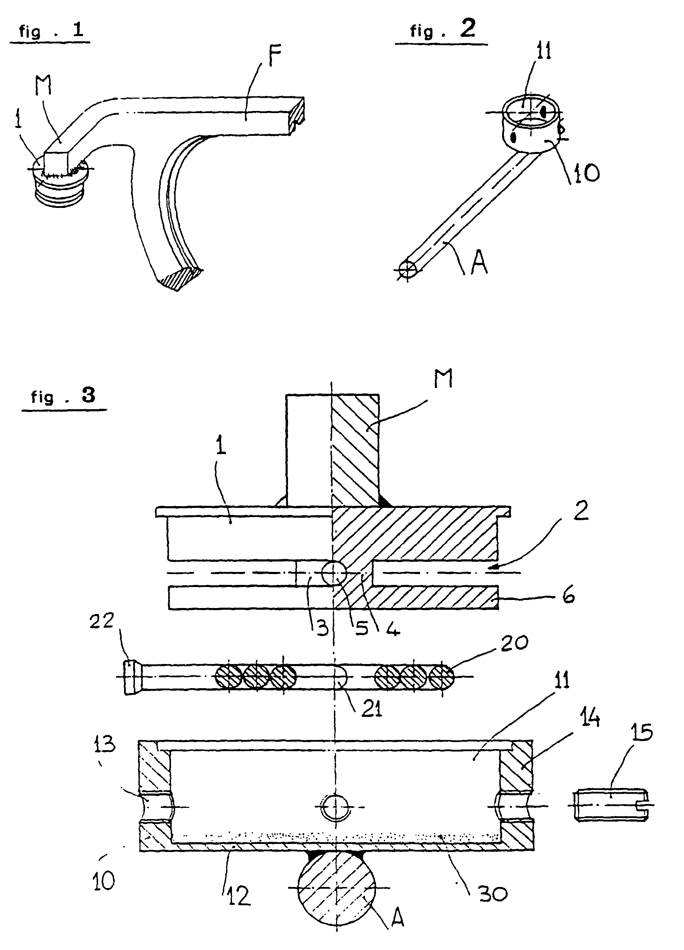

- fig. 1 of plate 1 is a view in perspective, from behind a spectacle frame, of a part of the device in question as applied to the nose rest or edge of the frame;
- fig. 2 of plate 1 is a view in perspective of the tip of an arm that has been fitted with another part of this invention;
- fig. 3 of plate 1 shows a vertical, detailed view of an axial section of the main parts of the device;
- fig. 4 of plate 2 shows a vertical view of an axial section of the same parts as those in figure 3 that have been fitted together;
- fig. 5 of plate 2 is a plan view of the frame of a pair of spectacles fitted with hinges that connect the arms to the frame and which hinges have been manufactured in accordance with the invention.

In all the figures, the same elements have been shown or shall be deemed to have been shown, with the same reference number.

The figures on the attached plates show a spectacle frame (F) that is fitted with a nose rest or edge (M) of the traditional type.

A drum (1) is fixed to or at least firmly held in position on the nose rest (M). The drum (1) is fitted with a groove(2) that also has a guideway (3) on the hub (4) that has a through hole or dead hole (5).

The drum (1) is first placed in space (11) of a cylindrical box (10), the bottom of which (12) is fixed to or firmly connected to the arm (A). Next, the drum (1) is fixed to a nose rest (M).

The box (10) has two or more through holes (13) on the cylindrical surface (14). One or more holes (13) should be threaded to accommodate a screw (15).

The groove(2) of the drum or reel (1) houses a spiral spring (20), the inside end of which (21) is housed in the guideway (3) and the hole (5) of the drum (1). The outside end (22) is passed into one of the holes (13) of the box (10).

These are the simple and small number of main parts of the hinge. The assembly system and its main functions will now be summarised, partly in order to ascertain how fully it achieves the preset aims.

First, a suitable quantity of viscous material (30) is deposited into the space (11) of box (10). This may be of a polybutane or silicon based type or it may be made of an antifriction type material such as Teflon.

The drum is next positioned in the space (11) of the box (10). The quantity of material (30) that has already been applied to the space (11) must be such as to enable the axes of the holes (13) to be aligned with the axis of the groove(2) of the drum (1) that is fitted there.

In order to fit the elastic device (20) in the best position, align a hole (13) of the box (10) with the hole (5) of the drum (1) and insert one end (21) of the wire of the spiral spring (20). This may be in straight or preformed sections of a preset length.

If the box (10) has already been fixed to the arm (A) and if the drum (1) still has to be fixed to the nose rest (M), the drum (1) is immobilised with a jig. Arm (A) and then the box (10) are made to complete a number of revolutions so that the elastic device (20) is completely wrapped around a single spiral spring on the hub (4) of the groove(2). Only the edge (22) of the elastic device (20) is allowed to protrude from the hole (13) of the box (10). For obvious reasons of convenience, the head (22) of the spring (20) should be fitted with a head that has a diameter that is greater than the holes (13).

A series of screws (15) or threaded grub screws of the required length are inserted into the holes (13) or the box (10) in order to prevent the spiral spring (20) from leaving its pre-loaded position.

The screws or threaded grub screws (15) occupy the groove (2) in order to prevent the drum (1) from escaping from the box (20).

When the hinge has been thus prepared, it is fixed to the nose rest (M) by means of welding or another system of fixing so that the nose rest (M) is fixed to the top surface of the drum (1) in such a way that the arm (A) is definitively fitted to the frame (F).

Pre-loading the spring (20) ensures that the arm will rotate towards the frame (F), to its natural closed position

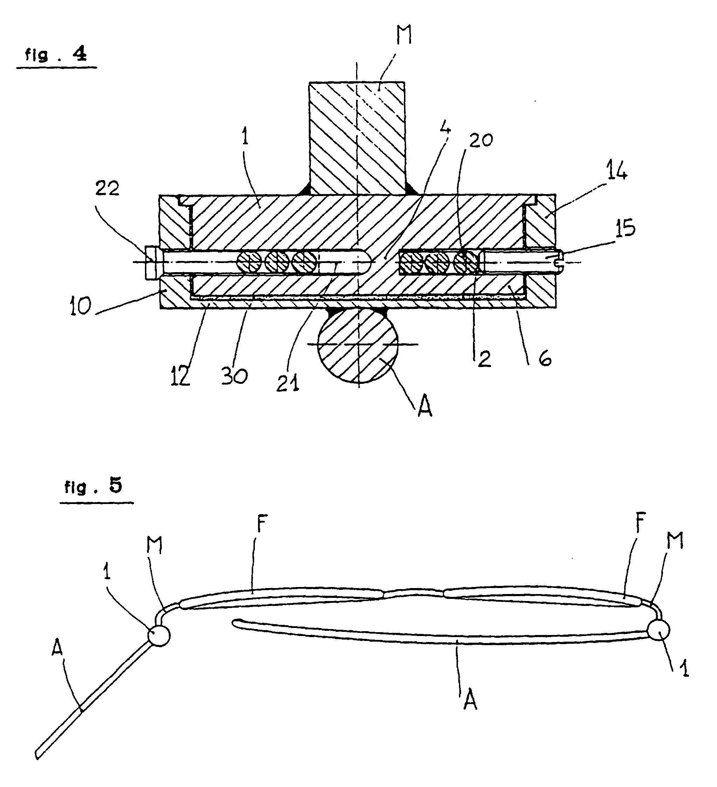

Under normal opening pressure, the arm (A) and the box (10) to which it is fixed can be made to rotate with practically unlimited opening range in relation to the frame (F) because there is no stop that limits maximum opening, as is shown in figure 5. This overcomes the problem of deformation of the frame, which is one of the stated aims.

After the action or pressure of opening is stopped, the pre-loaded elastic device, which is further stretched by the opening of arm (A), tends to make arm (A) rotate rapidly towards its closure position on frame (F).

The retarding action of the viscous material (30) counteracts the reaction of the elastic device (20). If the drum (1) is placed in the seat (11), the previously applied viscous material (30) sticks not only to the base (12) of the box (10) but also to the base (6) of the drum (1).

In this way, when the arm (A) has been opened, it gradually and independently returns to the closed position, which is one of its designed aims.

Of course, the density of the viscous material or other anti-friction material (30) and the degree of pre-loading of the spiral spring (20) must be properly established according to the speed at which the arms are required to close.

The manufacturing solution illustrated, as already specified, shall be deemed to be merely indicative and not restrictive, just like the assembly system exemplified. This is because it is also, for example, possible to connect the drum (1) to the arm (A) and connect the box (10) to the nose rest (M). It is also possible to directly connect box (10) to the drum (1) directly to the eye piece of the frame without placing a nose rest (M) between them. Equally the arms (A) or nose rests (M) can be fixed to the hinge using any system.

These modifications and other modifications shall nevertheless be deemed to form part of the original features of the invention to be protected by patent.

## Claims

1. Hinge for automatic closure of a spectacle arm comprising two parts movable with respect to each other, **characterized in that** one of the parts is constituted by a drum (1) for winding an elastic device or spiral spring (20) which is housed in the other part constituted by a box (10) containing viscous or antifriction material (30), which latter sticks to the two parts (1) and (10) and to the elastic device or spiral spring (20), for hindering or delaying the closure reaction by tending to keep the two parts (1) and (10) coaxially connected and pushed by the closure of the elastic device or spiral spring (20), the drum (1) and a hub (4) formed into it being connected to one end (21) of the elastic device or spiral spring (20) for tending to conserve the housing position, the opposite end (22) of which elastic device or spiral spring (20) being held in holes (13) of the lateral surface (14) of the box (10) containing the drum (1) for causing a suitable closure reaction of the arm (A) to the action of opening or distancing from the frame (F) of the
spectacles.

2. Hinge according to claim 1, **characterized in that**
the drum (1) is fixed to the edges of the frame (F) or to the tips of the arm (A) and is fitted with a groove (2) for housing an elastic device or spiral spring (20), the elastic device or spiral spring (20) is fixed by means of a hole (5) made in the hub (4) and an inside surface (6) of the drum (1) is disposed to come into contact with the viscous material or antifriction material (30) which has been applied to the bottom (12) of the box (10) in which the drum (1) is housed.

3. Hinge according to claim 1 and 2, **characterized in**
**that** the box (10) is fixed to the edge of the arm (A) which is provided with a space (11), the bottom (12) of which contains viscous material of the polybutane or silicon based type or other antifriction material of the Teflon® based type (30), the space (11) being designed to house the drum (1) in such a way that the holes (13) in the cylindrical surface (14) are aligned on the axis of the groove (2) of the drum (1).

4. Hinge according to claims 1 to 3, **characterized in**
**that** between the drum (1) and the box (10) the elastic device or spiral spring (20) is placed in such a way that it has said one end (21) held in the hole (5) of the hub (4) of the drum (1), whilst the opposite end (22) is held in one of the holes (13) of the box (10), a series of said spiral springs acting as elastic device (20) being housed in the groove (2) for giving to the elastic device (20) sufficient reaction force to the opening and distancing force of the arm (A) on the frame (F).

5. Hinge according to claim 4, **characterized in that** a
series of threaded grub screws (15) occupy the threaded holes (13) of the lateral surface (14) for keeping the required degree of pre-loading of the spiral spring (20).

## Patentansprüche

1. Scharnier für das automatische Schliessen eines Brillenbügels, umfassend zwei im Verhältnis zueinander bewegliche Teile, **dadurch gekennzeichnet, dass** eines der Teile aus einer Trommel (1) zum Spannen einer elastischen Vorrichtung oder einer Spiralfeder (20), die in dem anderen Teil untergebracht ist, der durch ein viskoses oder Gleitmaterial (30) enthaltendes Gehäuse (10) gebildet wird, wobei letzteres an den zwei Teilen (1) und (10) und an der elastischen Vorrichtung oder Spiralfeder (20) anhaftet, um die Schliessreaktion zu verhindern oder zu verzögern, indem diese darauf ausgerichtet sind, die zwei Teile (1) und (10) koaxial miteinander verbunden zu halten und durch das Schliessen der elastischen Vorrichtung oder Spriralfeder (20) aneinandergedrückt zu halten, wobei die darin ausgeformte Trommel (1) und eine Nabe (4) mit einem Ende (21) der elastischen Vorrichtung oder Spiralfeder (20) verbunden sind, um darauf ausgerichtet zu sein, die Gehäuseposition beizubehalten, wobei das gegenüberliegende Ende (22) der elastischen Vorrichtung oder Spiralfeder (20) in Löchern (13) der Seitenfläche (14) des Gehäuses (10) gehalten wird, welches die Trommel (1) enthält, um eine geeignete Schliessreaktion des Bügels (A) beim Vorgang des Öffnens oder Wegbewegens von dem Rahmen (F) der Brille zu bewirken.

2. Scharnier nach Anspruch 1, **dadurch gekennzeichnet, dass** die Trommel (1) an den Kanten des Rahmens (F) oder an den Spitzen des Bügels (A) fixiert ist und mit einer Vertiefung (2) zur Unterbringung einer elastischen Vorrichtung oder einer Spiralfeder (20) ausgestattet ist, die elastische Vorrichtung oder Spiralfeder (20) mittels eines Loches (5) in der Nabe (4) fixiert ist und eine Innenfläche (6) der Trommel (1) so angeordnet ist, dass sie mit dem viskosen Material oder Gleitmaterial (30) in Kontakt kommt, welches auf den Boden (12) des Gehäuses (10) aufgebracht wurde, in welchem die Trommel (1) untergebracht ist.

3. Scharnier nach Anspruch 1 und 2, **dadurch gekennzeichnet, dass** das Gehäuse (10) an der Kante des Bügels (A) fixiert ist, welcher mit einem Zwischenraum (11) versehen ist, dessen unterer Teil viskoses Material vom Polybutan- oder Silicium-Typ oder anderes Gleitmaterial vom Teflon® -Typ (30) ist, wobei der Zwischenraum (11) so ausgelegt ist, dass er die Trommel (1) in einer Weise aufnimmt, dass die Löcher (13) in der zylindrischen Oberfläche (14) an der Achse der Vertiefung (2) der Trommel (1) ausgerichtet sind.

4. Scharnier nach Anspruch 1 bis 3, **dadurch gekennzeichnet, dass** zwischen der Trommel (1) und dem Gehäuse (10) die elastische Vorrichtung oder Spiralfeder (20) so angebracht ist, dass das eine Ende (21) in dem Loch (5) der Nabe (4) der Trommel (1) gehalten wird, während das gegenüberliegende Ende (22) in einem der Löcher (13) des Gehäuses (10) gehalten wird, wobei eine Reihe der als elastische Vorrichtung (20) fungierenden Spiralfedern in der Vertiefung (2) untergebracht ist, um der elastischen Vorrichtung (20) ausreichend Reaktionskraft auf die öffnende und fernhaltende Kraft des Bügels (A) auf dem Rahmen (F) zu verleihen.

5. Scharnier nach Anspruch 4, **dadurch gekennzeichnet, dass** eine Reihe von Gewindestiften (15) die Gewindelöcher (13) der Seitenfläche (14) besetzen, um den erforderlichen Grad des Vorspannens der Spiralfeder (20) beizubehalten.

## Revendications

1. Charnière pour fermeture automatique d'une branche de lunettes comprenant deux parties mobiles entre elles, **caractérisée en ce que** l'une de ces parties se constitue d'un tambour (1) pour enrouler un dispositif élastique ou un ressort spiral (20), emboîté dans l'autre partie constituée d'une boîte (10) renfermant une matière visqueuse ou antifriction (30), cette dernière est fixée aux deux parties (1) et (10) ainsi qu'au dispositif élastique ou au ressort spiral (20) afin d'empêcher ou de retarder la réaction de fermeture inclinée à maintenir les deux parties (1) et (10) reliées de façon co-axiale et poussée distante par la fermeture du dispositif élastique ou du ressort spiral (20), le tambour (1) et un moyeu (4) façonné dans celui-ci se trouvent reliés à une extrémité (21) du dispositif élastique ou du ressort spiral (20) pour maintenir la position d'emboîtement, l'autre extrémité (22) du dispositif élastique ou du ressort spiral (20) est maintenue dans des trous de la surface latérale (14) de la boîte (10) renfermant le tambour (1) pour provoquer une réaction de fermeture adéquate de la branche (A) à l'action d'ouverture ou d'écartement de la monture (F) des lunettes.

2. Charnière selon la revendication 1, **caractérisée en ce que** le tambour (1) est fixé aux arêtes de la monture (F) ou aux extrémités de la branche (A) et se trouve munie d'une encoche pour abriter un dispositif élastique ou un ressort spiral (20), le dispositif élastique ou le ressort spiral (20) est fixé au moyen d'un trou (5) fait dans le moyeu (4), et une surface intérieure (6) du tambour (1) est disposé de sorte de venir en contact avec la matière visqueuse ou la matière antifriction ayant été appliquée au fond (12) de la boîte (10) où le tambour (1) est emboîté.

3. Charnière selon les revendications 1 et 2, **caractérisée en ce que** la boîte (10) se trouve fixée à l'extrémité de la branche (A) pourvue d'un espace (11), le fond (12) de lequel renferme la matière visqueuse du type à base de polybutane ou de silicone ou de toute autre matière antifriction du type Teflon® (30), l'espace (11) est conçu pour abriter le tambour (1) de telle sorte que les trous (13) de la surface cylindrique (14) sont alignés sur l'axe d'encoche (2) du tambour (1).

4. Charnière selon les revendications 1 à 3, **caracterisée en ce qu'**entre le tambour (1) et la boîte (10) le dispositif élastique ou le ressort spiral (20) se trouvent placés de telle sorte qu'une extrémité (21) est maintenue dans le trou (5) du moyeu (4) du tambour (1), tandis que l'extrémité opposée (22) se trouve maintenue dans l'un des trous (13) de la boîte (10), toute une série desdits ressorts spiraux opérant en tant que dispositif élastique (20) étant incorporés dans l'encoche (2) afin de transmettre au dispositif élastique (20) suffisamment de force pour réagir à la force d'ouverture et d'écartement de la branche (A) de la monture (F).

5. Charnière selon la revendication 4, **caractérisée en ce que** toute une série de vis larves filetées (14) occupent les trous filetés (13) de la surface latérale (14) pour maintenir le degré de tension nécessaire de pré-chargement du ressort spiral (20).
